# EUROPEAN PATENT APPLICATION

(11) **EP 1 499 101 A1**
(43) Date of publication of application: **19.01.2005**
(21) Application number: 04002589.2
(22) Date of filing: 05.02.2004
(51) Int. Cl.: H04N 1/00, H04N 1/23, H04N 1/32

(54) **Digital copier with selective use of integrated printing device or external printng device**

(30) Priority: 18.07.2003 US 623166
(71) Applicant: Hewlett-Packard Development Company, L.P., Houston, Texas 77070 (US)
(72) Inventor: Castle, Daniel C., Monmouth OR 97361 (US)
(74) Representative: Schoppe, Fritz, Dipl.-Ing.

(57) **Abstract**

A digital copier (10) configured to host an external output device (50) is provided. An image processing system comprising an external output device (50) and a host device configured to selectively pass image data to an integrated output device (40) and the external output device (50) is also provided. The output path of the image processing system is based upon at least one output characteristic.

## Description

### BACKGROUND OF THE INVENTION

Field of the Invention: The present invention relates generally to the field of electronic document imaging and more specifically relates to the field of digital copiers and printers.

State of the Art: A photocopy machine (referred to herein as a ∼copier") optically scans a document and outputs a replica of the document. The scanning portion of an analog copier transfers the scanned image to an output portion comprising a rotating drum over which passes output media (*e.g*. , paper) for toner deposition thereon. Since the analog scanned image is difficult to store for a significant period of time or to transmit external to the analog copier, the scanning portion and output portion of the analog copier are integrated within the same analog copier.

A digital copier, as opposed to an analog copier, converts the scanned image to a digital signal that may be stored, altered or transferred to an output device located within the digital copier or external thereto. Therefore, it may not be necessary to include an output device that is integrated within the digital copier. However, due to the analog origins of copiers, the scanning portion and the output device are typically integrated within the same digital copier. The output device of a digital copier may comprise a digital printer, such as a laser printer or a traditional analog printing method.

Functionality, complexity, size and cost may vary greatly between copiers. A typical copier may be functionally limited to producing black and white copies on a sheet of output media selected from a single paper tray. In such a copier, the color, weight and size of the output media can only be altered by manually changing the output media in the single paper tray. Alternatively, in an office environment having more than one copier, a user may travel to a copier having the desired output media type loaded therein. Similarly, the user may travel to a copier having a desired functionality, such as color output capabilities or desired output quality. It would be advantageous to locate one or more copiers having the desired functionality for a particular copy job so that a user can quickly and easily make copies by traveling to the nearest copier within an office environment.

Another method of reproducing documents so that the copies have desired output characteristics, such as output media type, color and resolution, comprises optically scanning the document to be reproduced, converting the scanned image to a digital signal, transferring the digital signal to a computer and sending the digital signal from the computer to an appropriate output device, such as a digital printer capable of producing the desired output characteristics. This method is labor intensive, time consuming and may be complex. The optical scanner, computer and output device may be interconnected through a network that may be complex and non- intuitive to a typical user. Further, it may be necessary for a plurality of users to cooperate in order to share the networked devices. In addition, since the digital signal traversing the network between the scanner, the computer and the output device is theoretically available to all users of the network, security may be an issue.

Typically, the complexity, size and cost of a copier increases as its functionality increases. A copier in the form of large, multi-function document center has increased copier functionality that may include multiple paper trays for selecting from a plurality of output media types, multiple paper paths, color copying capabilities, and increased output quality for high resolution applications such as photograph reproduction. A multi-function document center may also include printing, faxing, and networking capabilities. However, it may be advantageous to locate one or more smaller, less expensive, and less complex copiers near a plurality of users in an office environment or in any space that is limited in size or is accessible to users with little or no experience with copiers, such as in a public library or commercial space.

Thus, it would be advantageous to develop a technique and device that provides a low cost migration path for added copier functionality and reduces output path complexities.

### SUMMARY OF THE INVENTION

The present invention includes a method and apparatus for photocopying documents. In one embodiment of the present invention, a digital copier is configured to host an external output device. In another embodiment of the present invention an image processing system comprises an external printing device and a host device configured to selectively pass image data to an integrated printing device and the external printing device.

In one embodiment of a method of the present invention, the method includes determining an output path of an image processing system based upon at least one output characteristic. In another embodiment of a method of the present invention, the method includes a computer readable medium including computer readable instructions for directing at least a portion of a copy job output to an external output device.

### BRIEF DESCRIPTION OF THE SEVERAL VIEWS OF THE DRAWINGS

The foregoing and other advantages of the invention will become apparent upon reading the following detailed description and upon reference to the drawings in which:

FIG. 1 is a block diagram of digital copier according to an embodiment of the present invention; and

FIG. 2 is a flow diagram of a method according to an embodiment of the invention for producing a copy of a document by selectively switching the copy output between an output device integral to a copier and an output device external to the copier.

### DETAILED DESCRIPTION OF THE INVENTION

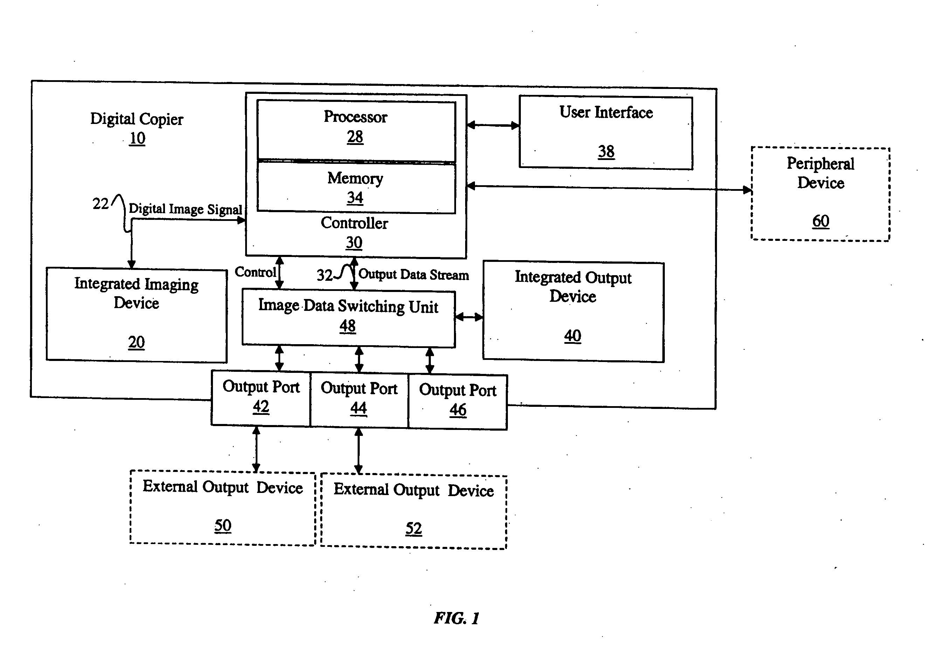

FIG. 1 illustrates a block diagram of a digital copier 10 according to one embodiment of the present invention. The digital copier 10 comprises a controller 30 electrically coupled to an integrated imaging device 20, an integrated output device 40, a user interface 38 and an image data switching unit 48. As discussed above, while a scanning portion and an output portion are integrated within an analog copier, it may not be necessary to include the integrated output device 40 within the digital copier 10. Integrating the controller 30, the integrated imaging device 20 and the integrated output device 40 within the digital copier is presently preferred, although the invention is not so limited.

The integrated imaging device 20 may comprise any conventional imaging device configured to produce a digital image signal 22 corresponding to a picture or image of an object (not shown). For example, the integrated imaging device 20 may comprise a digital camera or a flatbed digital scanner configured to optically scan a document (not shown) and convert the scanned image to the digital image signal 22. The integrated imaging device 20 may be configured to selectively scan images in either black-and-white or color. The integrated imaging device 20 may also be configured to selectively scan images at a plurality of color resolutions (*e.g*., 48-bit color) and optical image resolutions (*e.g*., 1200 dots per inch). As discussed below, it may be advantageous to select between black-and-white and color scanning, color resolutions, and optical resolutions depending on the desired copy quality and the functionality of a selected integrated output device 40 or any external output devices 50, 52 optionally coupled to the digital copier 10.

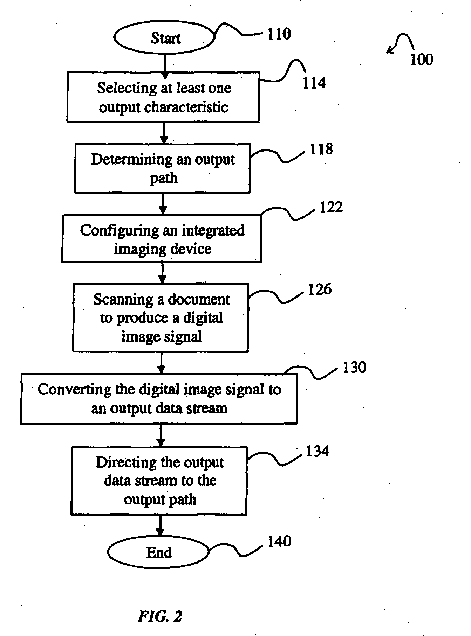

The controller 30 comprises a processor 28 and memory device 34. The processor 28 is configured to execute software and to perform the calculations and tasks of the digital copier 10. The processor 28 may also be configured to receive commands and send status to the user interface 38. The memory device 34 is configured to store parameters and software programs, such as device drivers configured to control the operation of the integrated imaging device 20, the integrated output device 40 and any external output devices 50, 52 optionally coupled to the digital copier 10. The memory device 34 may also be configured to store computer executable instructions for performing the process 100 illustrated in FIG. 2 below. The memory device 34 may further be configured to store the digital image signal 22 received from the integrated imaging device 20.

The user interface 38 comprises an input/output device configured to allow a user of the digital copier 10 to execute a particular copy job. For example, the user interface 38 may comprise a touch screen display and/or a keypad electrically coupled to the controller 30. Interface driver software stored in the memory device 34 of the controller may be configured to display a graphical user interface (∼GUI") on the touch screen display. Using the touch screen display and/or the keypad, the user can select the copy attributes and output characteristics for the copy job from a menu of options displayed in the GUI. Thus, the user may employ the user interface 38 to select an output path for the copy job to be printed on the integrated output device 40 or any external output devices 50, 52 optionally coupled to the digital copier 10. In one embodiment of the present invention, the integrated output device 40 may be part of the default output path. The user may also employ the user interface 38 to configure the integrated imaging device 20 and the output devices 40, 50, 52.

The image data switching unit 48 is electrically coupled to the controller 30, the integrated output device 40 and a plurality of output ports 42, 44 and 46 (three shown). One skilled in the art will recognize that the digital copier 10 may comprise any number of output ports 42, 44, 46 as is practical for its intended application. The output ports 42, 44, 46 are configured to electrically couple to an external output device 50, 52 (two shown). Each output port 42, 44, 46 may comprise, for example, a conventional serial printer port, parallel printer port or any electrical connection and/or protocol conventionally used to electrically couple to a printer or imaging device. To reduce comp lexity, it is presently preferred that the digital copier 10 is configured to function as a host or hub for the external output devices 50, 52 without the use of a network or other interface. However, the present invention is not so limited and one or more of the output ports 42, 44, 46 may be configured to communicate with an external output device 50, 52 via a local area network (∼LAN") or a wide area network (∼WAN"), such as the Internet.

The integrated output device 40 and external output devices 50, 52 may each comprise any conventional digital printing device, such as a laser printer, inkjet printer and dot matrix printer. Further, the integrated output device 40 may comprise any printing device used in conventional copiers. The integrated output device 40 and external output devices 50, 52 may each be configured to have one or more distinct functional characteristics, such as printing speed, number of paper trays, number of paper paths, color output, color resolutions, printing resolutions, or any other functional characteristic that affects output quality. In one embodiment of the present invention, the digital copier 10 may be configured to detachably attach to at least one of the external output devices 50, 52.

The digital copier 10 may be further configured to electrically couple to a peripheral device 60 configured to transmit and/or receive data from the digital copier 10. The peripheral device 60 may comprise, by way of example only, and not by limitation, a processor, computer, facsimile machine, scanner, digital camera, printer, display device, memory device (*e.g*., drives that accept hard or floppy discs, tape cassettes, CD-ROM, or DVD-ROM), network server, mouse, or keypad. The digital copier 10 may be configured to transmit the digital image signal 22 or the output data stream 32 to the peripheral device 60 for processing, transferring, storing, displaying or printing. Similarly, the digital copier 10 may be configured to receive image data from the peripheral device 60 to be processed, stored and/or printed on the integrated output device 40 or external output devices 50, 52. The image data received from the peripheral device 60 may be preformatted for the intended integrated output device 40 or external output device 50, 52. Alternatively, the image data received from the peripheral device 60 may be formatted by the controller 30 into the output data stream 32.

FIG. 2 is a flow diagram of a process 100, according to one embodiment of the present invention, for imaging a document using the copier 10 shown in FIG. 1 and producing a copy of the document on output media by selectively directing the copy output between the integrated output device 40 and the external output devices 50, 52. Referring to FIGS. 1 and 2, after start 110, the process 100 comprises selecting 114 at least one output characteristic, determining 118 an output path, configuring 122 the integrated imaging device 20, scanning 126 a document to produce a digital image signal 22, converting 130 the digital image signal 22 to an output data stream 32, directing 134 the output data stream 32 to the output path, and ending 140.

Selecting 114 at least one output characteristic comprises employing the user interface 38 or an appropriate peripheral device 60 to select the attributes of the copy job. For example, and not by limitation, the at least one output characteristic may be selected from the group comprising copy speed, output media size, output media weight, output media color, output media material (*e.g.*, paper or transparency slide), color output (*e.g.*, black-and-white or color), color resolution, optical resolution, printing resolution, or any other functional characteristic that affects output quality or copying speed.

Determining 118 an output path comprises comparing the at least one output characteristic to the functionality of the integrated output device 40 and the external output devices 50, 52 and defining the output path to include one of the output devices 40, 50, 52 which is capable of providing the at least one output characteristic. Thus, it would be advantageous to store the configuration (including the type of media presently stored in any input paper tray) of each output device 40, 50, 52 in the memory device 34 of the controller 30. It may also be advantageous to display the configuration options in the user interface 38 while a user is selecting 114 the at least one output characteristic. Determining 118 the output path may further comprise selecting printer drivers stored in the memory device 34 corresponding to the output device 40, 50 or 52 in the determined output path and configuring the image data switching unit 48 to route the output data stream 32 accordingly.

Configuring 122 the integrated imaging device 20 comprises adjusting the settings of the integrated imaging device 20 to provide an optical scan of a document such that the at least one output characteristic may be achieved by the output device 40, 50 or 52 in the determined output path. For example, the integrated imaging device 20 may be configured 122 to scan an image in black-and-white or color, at a desired color resolution, and at a desired optical image resolution which will allow the desired output quality specified by the at least one output characteristic. Further, the integrated imaging device 20 may be configured 122 to scan at a speed compatible with the output device 40, 50 or 52 in the determined output path. Alternatively, the scanning speed may be predetermined by the configured 122 settings of the integrated imaging device 20 and may be faster than the output devices 40, 50, 52. Thus, a portion of the output data stream 32 may be temporarily stored in the memory device 34 before being sent to the output device 40, 50 or 52 in the determined output path.

Scanning 126 the document produces a digital image signal 22 that may or may not be configured for processing by the output devices 40, 50, 52. Thus, converting 130 the digital image signal 22 to the output data stream 32 comprises executing a printer driver software program stored in the memory device 34 corresponding to the output device 40, 50 or 52 in the determined output path. The printer driver software program is configured to receive the digital image signal 22 and to produce a print ready output data stream 32.

Directing 134 the output data stream 32 to the output path may comprise routing the output data stream 32 through the image data switching unit 48 to the integrated output device 40 or to an external output device 50, 52 via one of the output ports 42, 44 or 46. Directing 134 the output data stream 32 to the output path may further comprise routing the output data stream 32 to the peripheral device 60. As discussed in the example below, it may be advantageous to route a copy job to more than one output device 40, 50, 52. Thus, it may be necessary to convert 130 the digital image signal 22 into more than one output data stream 32, each corresponding to a different output device 40, 50, 52. Therefore, it may also be necessary to store the plurality of output data streams 32 in the memory device 34 and to direct 134 them one at a time to the appropriate output path. Alternatively, the image data switching unit 48 may be configured to route output data streams 32 to more than one output device 40, 50, 52 at a time.

To illustrate the process 100 discussed above in relation to FIG. 2, an example is provided wherein a user of a photocopy machine, such as the digital copier shown in FIG. 1, in an office environment is assumed to have three copy jobs to process. This example, which is for illustrative purposes only, and not for limitation, also assumes that the integrated output device 40 is only capable of making black-and-white copies.

The first copy job comprises a plurality of size reduced, black- and- white copie s of a text document. Employing the user interface 38, the user may select 114 a size reduction percentage, number of copies to be made, optical image resolution, and black-and-white output. The controller 30 may determine 118 that the integrated output device 40 has the required functionality to print the copies and may determine 118 a first output path through the image data switching unit 48 to the integrated output device 40.

The user may also desire to increase the overall speed of the first copy job by selecting 114 that a portion of the copies be printed by external output device 50, which the controller 30 also determines 118 to have the required functionality to print the portion of the copies of the first print job. Thus, the controller 30 may determine 118 a second output path through the image data switching unit 48 to output port 42 and external output device 50. After configuring 122 the integrated imaging device 20 and scanning 126 the text document, the controller 30 converts 130 the digital image signal 22 into a first output data stream 32 corresponding to the integrated output device 40 and a second output data stream 32 corresponding to external output device 50. Then, the image data switching unit 48 directs 134 the first output data stream 32 to the integrated output device 40 where a portion of the copies are printed and the second output data stream to the external output device 50 located near the digital copier 10 where the remainder of the copies are printed, ending 140 the first copy job.

The second copy job in the example comprises a plurality of color copies of a graphics document. The user may select 114 the number of copies and ∼Special Output 1 N Color "from the menu displayed in the user interface 38 for a set of predefined settings for making color copies with a known quality. The predefined settings may include color output, color resolution and optical image resolution. Alternatively, the user may select 114 the settings one at a time from the user interface 38.

The controller 30 may determine 118 that external output device 50 has the required functionality to print the color graphics document copies and may determine 118 an output path through the image data switching unit 48 to output port 42 and external output device 50. After configuring 122 the integrated imaging device 20 and scanning 126 the graphics document, the controller converts 130 the digital image signal 22 to an output data stream 32 corresponding to external output device 50. Then, the image data switching unit 48 directs 134 the output data stream 32 to external output device 50 located near the digital copier 10 where the color copies are printed, ending 140 the second copy job.

The third copy job in the example comprises a plurality of color copies of a glossy photograph. The user may select 114 the number of copies and Special Output 2 N Photo "from the menu displayed in the user interface 38 for a set of predefined settings for copying color photographs with a known quality. The predefined settings may include output media type, output media size, output media weight, color output, color resolution and optical image resolution. Alternatively, the user may select 114 the settings one at a time from the user interface 38.

The controller 30 may determine 118 that external output device 52 has the required functionality to print the color photograph copies and may determine 118 an output path through the image data switching unit 48 to output port 44 and external output device 52. After configuring 122 the integrated imaging device 20 and scanning 126 the graphics document, the controller converts 130 the digital image signal 22 to an output data stream 32 corresponding to external output device 52. Then, the image data switching unit 48 directs 134 the output data stream 32 to external output device 52 located near the digital copier 10 where the color photograph copies are printed, ending 140 the third copy job.

The above example illustrates that the present invention allows a user to copy a plurality document types and to produce copies of various qualities from a single location with a minimal amount of additional work and without the need to travel to several different copy machines located within an office environment. Thus, the present invention allows a user to customize the space dedicated as a document reproduction area and to meet specific needs through the low cost option of adding specialized output devices 50, 52.

While the present invention has been disclosed by way of example and in detail, those of ordinary skill in the art will recognize and appreciate that the invention is not so limited Those of ordinary skill in the art will recognize and appreciate that many additions, deletions and modifications to the disclosed embodiment and its variations may be implemented without departing from the scope of the invention, which is limited only by the appended claims and their legal equivalents.

## Claims

1. A photocopier configured to host at least one external output device, the photocopier comprising:
an integrated imaging device configured to provide a first signal corresponding to an image;
an integrated output device;
at least one output port; and
an image data switching unit configured to selectively switch a second signal corresponding to the image between the integrated output device and the at least one output port.

2. The photocopier of claim 1, further comprising a user interface configured to select at least one output characteristic.

3. The photocopier of claim 1, further comprising a controller electrically coupled to the integrated imaging device, the integrated output device and the image data switching unit, wherein the controller is configured to convert the first signal to the second signal and to selectively switch the image data switching unit.

4. The photocopier of claim 3, wherein the controller is further configured to:
electrically couple to a peripheral device;
selectively transmit the first signal and the second signal to the peripheral device; and
selectively receive the first signal and the second signal from the peripheral device.

5. A method for copying a document using an image processing system comprising an integrated imaging device, an integrated output device and at least one external output device, the method comprising:
determining an output path based upon at least one output characteristic;
producing a first signal corresponding to an image of the document;
converting the first signal to a second signal; and
directing the second signal to the output path.

6. The method of claim 5, wherein determining the output path comprises:
selecting the at least one output characteristic; and
comparing the at least one output characteristic to the functionality of the integrated output device and the at least one external output device.

7. The method of claim 6, further comprising defining the output path to include at least one of the integrated output device and the at least one external output device such that the output path provides the at least one output characteristic.

8. The method of claim 7, further comprising configuring the integrated imaging device and the at least one of the integrated output device and the at least one external output device included in the output path to provide the at least one output characteristic.

9. An image processing system comprising:
a host device comprising:
an output port;
a first means for printing; and
a switching means for selectively passing image data to the output port and the first means for printing; and
a second means for printing, wherein the second means for printing is electrically attachable to the output port of the host device.

10. The image processing system of claim 9, wherein the host device further comprises an imaging means for providing a first electrical signal, wherein the first electrical signal is representative of an image.
